# EUROPEAN PATENT APPLICATION

(11) **EP 3 113 245 A1**
(43) Date of publication of application: **04.01.2017**
(21) Application number: 15175198.9
(22) Date of filing: 03.07.2015
(51) Int. Cl.: H01M 2/14, H01M 2/16, H01M 4/505, H01M 10/0525

(54) **PROCESS FOR PRODUCING MODIFIED POLYOLEFIN MEMBRANES FOR LITHIUM ION BATTERIES**

(71) Applicant: BASF SE, 67056 Ludwigshafen am Rhein (DE)
(72) Inventor: Bunte, Christine, 68165 Mannheim (DE); Schmidt-Leithoff, Joachim, 68165 Mannheim (DE); Miller, Jeremie, 15207 Pittsburgh (US); Wolf, Hannes, 67061 Ludwigshafen (DE); Gollub, Caroline, 68239 Mannheim (DE); Feese, Elke, 07960 Morristown (US); Muehlbach, Klaus, 67269 Gruenstadt (DE)
(74) Representative: BASF IP Association

(57) **Abstract**

The present invention relates to a process for producing modified porous polyolefin membranes comprising the process steps of contacting a porous polyolefin membrane (A) with at least one organoborane-donor complex (B1), contacting the treated membrane with molecular oxygen (O₂), followed by contacting the treated membrane with an aqueous solution (C) comprising at least one monomer (C1) containing at least one carbon-carbon double bond, and at least one decomplexing agent (C2).

The present invention further relates to said modified porous polyolefin membranes obtainable or obtained by the process of the invention and to electrochemical cells comprising said modified porous polyolefin membranes.

## Description

The present invention relates to a process for producing modified porous polyolefin membranes comprising the process steps of contacting a porous polyolefin membrane (A) with at least one organoborane-donor complex (B1), contacting the treated membrane with molecular oxygen (O₂), followed by contacting the treated membrane with an aqueous solution (C) comprising at least one monomer (C1) containing at least one carbon-carbon double bond, and at least one decomplexing agent (C2).

The present invention further relates to said modified porous polyolefin membranes obtainable or obtained by the process of the invention and to electrochemical cells comprising said modified porous polyolefin membranes.

Secondary batteries, accumulators or "rechargeable batteries" are just some embodiments by which electrical energy can be stored after generation and used when required. Owing to the significantly better power density, there has in recent times been a move away from the water-based secondary batteries toward development of those batteries in which the charge transport in the electrical cell is accomplished by lithium ions. Many components are of significance, such as the electrodes and the electrolyte. However, particular attention will be paid to the separator which physically separates the anode and the cathode, thereby preventing short circuits.

On one hand, the separator should allow lithium ions to pass. On the other hand, a separator should have the necessary mechanical properties to effectively separate anode and cathode from each other. There are several attempts to improve the cycle stability of lithium ion cells by tailoring the battery separators depending on the active materials that are used and on the assembly of the respective electrochemical cell.

It has been reported that manganese cations which were dissolved from a manganese dioxide electrode should be selectively blocked by a separator that has been coated with a porous pol-ymer gel (US20050287425). The porous coating is applied in a solvent-born approach using a solution of the polymer in one solvent, and a second, pore-forming solvent. In this strategy, no chemical bond is formed between the separator and its coating, which results in materials of questionable long-term stability. This is particularly critical as even small local adhesion failures can cause uneven current distribution, which is detrimental to battery performance.

In other reports, a thin layer of porous material was deposited on top of the separator while the micropores were not filled (US 6,881,515 B2). Again, the coating was not covalently attached to the separator.

A modification procedure of battery separators involving several steps was described in US 6,830,782 and US 2004/0242794. The goal was to improve hydrophilicity and wetting of the separators. The following treatments were suggested: a) activation and treatment with a hydrophilic polymer, or b) activation, treatment with a hydrophilic polymer and monomer grafting, c) solvent treatment, activation and treatment with a hydrophilic polymer or d) solvent treatment, activation, treatment with a hydrophilic polymer and grafting of a monomer. However, if these procedures are used, the first coating layer that is applied onto the separator is not covalently attached, but merely adheres to the surface of the oxidized polyolefin membrane. Hence, this interaction is not stable.

A covalent bond is, however, established when C-H reactive groups of an oligomeric or polymeric product are reacted with the polyolefin separator, e. g. by insertion of a carbene or nitrene (US20130022876A1). The reactive groups are formed from carbene- or nitrene-forming precursors. As the approach relies on a covalent modification of the polyolefin material, the resulting coatings can be expected to be stable. However, the respective precursor materials are not readily available.

For example, in JP2002025527 A2, porous polyolefine membranes are modified for improved performance in lithium ion cells containing manganese spinel cathodes. The separators were functionalized with cation exchange groups that will capture any manganese cations that were dissolved from the electrode into the electrolyte. The described modification procedures are UV-initiated grafting of poly(acrylic acid). The acid groups may be converted into metal carboxylate groups. The strategy has similarity to the one outlined in this patent. However, UV irradiation is a work-intensive step that will not ensure an even modification both on the surface of the separator and within its pores, as the number of grafting sites depends on the penetration thickness of the UV light. As a second modification procedure, immersion into fuming sulfuric acid to sulfonate the polyolefin was described. This treatment is very simple in principle, but limited to a specific surface chemistry

Sulfonation was also used in JP2001167749A2 to obtain a functional separator that could trap free ammonia, which is causes self-discharge in alkaline batteries.

Senyarich and Viaud used UV-initiated grafting of vinylic monomers to modify the pores of a separator with ammonia-trapping functionalities (US6042970).

Radiochemical grafting has been described as well. For example, Gineste and Pourcelly (J. Membrane Sci. 1995, 107, 155) used this technique to graft poly(acrylic acid) to a standard polyolefin separator to improve wettability in carbonate solvents.

The processes for modifying polyolefin separators known from the literature and the separators obtained by said processes still have deficiencies in view of one or more of the properties desired for such production processes, for example with regard to economic viability, or for the obtained separators, for example with regard to thermal stability, mechanical stability, chemical stability, wettability with electrolyte and good ion conductivity.

It was therefore an objective of the present invention to provide an efficient, flexible process for producing modified polyolefin membranes, which can be used as separators for a long-lived electrochemical cells, and to provide modified polyolefin membranes, which have advantages in respect of one or more properties of known separators, in particular separators which display sufficient ion conductivity, improved wettability with electrolytes, low thickness, high thermal and chemical stability and good mechanical properties, for example sufficient flexibility and sufficient stability with respect to growing metal dendrites. Furthermore, it was an objective to provide electrochemical cells comprising said membranes, wherein the electrochemical cells do not suffer from short circuits after longer operation.

This object is achieved by a process for producing a modified porous polyolefin membrane, comprising at least the process steps of
(a) contacting a porous polyolefin membrane (A) with at least one organoborane-donor complex (B1),
(b) contacting the treated membrane of process step (a) with molecular oxygen (O₂),
(c) contacting the treated membrane of process step (b) with an aqueous solution (C) comprising
   (C1) at least one monomer (C1) containing at least one carbon-carbon double bond, and
   (C2) at least one decomplexing agent,
      and
(d) optionally rinsing the membrane which has been modified in process step (c) and/or further modifying said membrane by converting any acidic functional groups of the polymerized monomers (C1) to the corresponding lithiated functional groups.

Porous polyolefin membranes (A) which can be used in process step (a) are usually known and several of these membranes are commercially available. The porous polyolefin membrane (A) comprises one or more polyolefines, which can be selected from a wide variety of known polyolefines. Preferably the porous polyolefin membrane (A) comprises one or more polyolefines selected from the group consisting of polyethylene, polypropylene, polybutylene, copolymers of ethylene and propylene and copolymers of ethylene with hexene or octene, in particular polyethylene and polypropylene.

In one embodiment of the present invention the inventive process is characterized in that the porous polyolefin membrane (A) comprises one or more polyolefines selected from the group consisting of polyethylene, polypropylene, polybutylene, copolymers of ethylene and propylene and copolymers of ethylene with hexene or octene, in particular selected from polyethylene and polypropylene.

Polyolefin membranes (A), which can be used in process step (a), usually show different properties and combination of properties. Typical properties of porous membranes are porosity, pore size and thickness. All these properties can be varied in a wide range depending on the production process of said porous polyolefin membranes.

The porosity of the polyolefin membranes (A) which can be used in process step (a) can be varied in a wide range. Preferably polyolefin membranes (A) has a porosity in the range from 30% to 70%. The porosity is determined by the means of methods known to the person skilled in the art, such as liquid adsorption.

The pore size of polyolefin membranes (A) can be varied in a wide range. Preferably polyolefin membranes (A) has a pore size from 0.01 µm to 1 µm.

Also the thickness of polyolefin membranes (A) can also be varied in a wide range. Preferably polyolefin membranes (A) has a thickness in the range from 5 to 200 µm, preferably in the range from 8 to 40 µm.

In one embodiment of the present invention the inventive process is characterized in that the porous polyolefin membrane (A) has a porosity in the range from 30% to 70% and a pore size from 0.01 µm to 1 µm

In another embodiment of the present invention the inventive process is characterized in that the porous polyolefin membrane (A) has a thickness in the range from 5 to 200 µm, preferably in the range from 8 to 40 µm.

In another embodiment of the present invention the inventive process is characterized in that the porous polyolefin membrane (A) has a porosity in the range from 30% to 70%, a pore size from 0.01 µm to 1 µm and a thickness in the range from 5 to 200 µm, preferably in the range from 8 to 40 µm.

Organoborane-donor complexes (B1) which can be used in process step (a) are usually known and some of these complexes are commercially available. In these complexes the Bor atom of the Lewis acid organoborane, preferrably of a trialkylboran, in particular of triethylboran or tri-n-butylborane, is coordinated by a free electron pair of an atom of the Lewis base, such as an oxygen atom of an ether or a nitrogen atom of an amine forming a lewis acid base adduct. Preferred organoborane-donor complexes (B1) are organoborane-amine complexes such as described in WO 2010/149742 on page 16, paragraph [0032] to page 19, paragraph [0036]. Particularly preferred donors comprise one amine function and one ether function such as morpholin or 3-methoxypropylamine.

In one embodiment of the present invention the inventive process is characterized in that the organoborane-donor complex (B1) is an organoborane-amine complex.

Depending on the nature of the organoborane-donor complex (B1), which might be a solid or a liquid at room temperature (20 °C), it is possible to use the organoborane-donor complex (B1) in neat form or as a solution (B) comprising the organoborane-donor complex (B1) and at least one solvent (B2). Preferred is the use of a solution (B) comprising the organoborane-donor complex (B1) and at least one solvent (B2). The concentration of the organoborane-donor complex (B1) in solution (B) can be varied in a wide range. Preferred is a solution (B), wherein the proportion by weight of the sum of all organoborane-donor complexes (B1) based on the total weight of solution (B) is in the range from 0.1 to 20% by weight, preferably in the range from 1 to 5% by weight.

In one embodiment of the present invention the inventive process is characterized in that in process step (a) the organoborane-donor complex (B1) is used as a solution (B) comprising the organoborane-donor complex (B1) and at least one solvent (B2), wherein the proportion by weight of the sum of all organoborane-donor complexes (B1) based on the total weight of solution (B) is in the range from 0.1 to 20% by weight, preferably in the range from 1 to 5% by weight.

Solvent (B2) can be selected from a wide variety of solvents, in particular organic solvents which do not react with the used organoborane-donor complex (B1). That means in particular that the Lewis-basicity of the solvent molecules should be lower than the Lewis-basicity of the donor molecule and the organoborane should not react with the solvent molecules.

Examples of solvents (B) are saturated hydrocarbon, such as alkanes, aromatic hydrocarbons, such as substituted or unsubstituted aromatic hydrocarbons, polar aprotic solvents, such as organic carbonates like dimethyl carbonate, esters, ethers, sulfones like DMSO, sulfamides, amides like DMF or DMAc, nitriles like acetonitrile, lactams like NMP, lactones, linear or cyclic peralkylated urea derivatives like TMU or DMPU, fluorinated ether, fluorinated carbamates, fluorinated carbonated or fluorinated esters. Preferred are solvents (B) which are no or only weak Lewis bases. Particular preferred solvent (B2) is selected from the group consisting of C₅-C₂₀-alkanes, C₆-C₁₀-cycloalkanes and C₇-C₁₈-alkyl substituted aromatic hydrocarbons, in particular n-hexane, isohexane, n-heptane, cyclohexane, toluene, xylenes, cumol and mixtures thereof.

In one embodiment of the present invention the inventive process is characterized in that the solvent (B2) is selected from the group consisting of C₅-C₂₀-alkanes, C₆-C₁₀-cycloalkanes and C₇-C₁₈-alkyl substituted aromatic hydrocarbons, in particular selected from the group consisting of n-hexane, isohexane, n-heptane, cyclohexane, toluene, xylenes, cumol and mixtures thereof.

The time for contacting the porous polyolefin membrane (A) with the organoborane-donor complex (B1) can be varied in a wide range. The period of time should allow a homogenous distribution of at least one organoborane-donor complex (B1) on the complete surface and within the pores of the porous polyolefin membrane (A). Preferably in process step (a) the porous polyolefin membrane (A) is contacted with the source of the organoborane-donor complex (B1) for a time in the range from 10 sec to 1000 min, preferably in the range from 1/3 min to 1 min.

In one embodiment of the present invention the inventive process is characterized in that in process step (a) the porous polyolefin membrane (A) is contacted with the source of the organoborane-donor complex (B1) for a time in the range from 10 sec to 1000 min, preferably in the range from 1/3 min to 1 min.

Process step (a) is preferably done in the absence of oxygen in order to prevent any uncontrolled or unintentional reaction of the organoborane-donor complex (B1) with oxygen even though the organoborane-donor complex (B1) is much less reactive towards oxygen than the Lewis acidic organoborane itself. During process step (a) at least one organoborane-donor complex (B1) is preferably homogenously distributed on the complete surface and within the pores of the porous polyolefin membrane (A).

In process step (b) the treated membrane of process step (a), that is the porous polyolefin membrane (A) comprising physically adsorbed organoborane-donor complex (B1), is contacted with molecular oxygen (O₂). Molecular oxygen can be applied in pure form or in diluted form as a mixture with an inert gas like argon or nitrogen, preferably in form of air, in a wide pressure range, e.g. in the range from 0.01 bar to 100 bar, preferably at atmospheric pressure. Preferably in process step (b) the source of the molecular oxygen O₂ is air and the contact takes place at room temperature and atmospheric pressure.

In one embodiment of the present invention the inventive process is characterized in that in process step (b) the source of the molecular oxygen O₂ is air and the contact takes place at room temperature and atmospheric pressure.

The time for contacting the porous polyolefin membrane, which comprises physically adsorbed organoborane-donor complex (B1), can be varied in a wide range. Preferably the period of time should allow a homogenous distribution of molecular oxygen (O₂) on the complete surface of the treated porous polyolefin membrane (A). Preferably the treated membrane of process step (a) is contacted with molecular oxygen (O₂) for a time in the range from 1 sec to 10 min, preferably in the range from 10 sec to 1 min.

In one embodiment of the present invention the inventive process is characterized in that in process step (b) the treated membrane of process step (a) is contacted with molecular oxygen (O₂) for a time in the range from 1 sec to 10 min, preferably in the range from 10 sec to 1 min.

In process step (c) the treated membrane of process step (b), that is the porous polyolefin membrane (A) comprising physically adsorbed organoborane-donor complex (B1) and molecular oxygen (O₂), is contacted with an aqueous solution (C) comprising at least one monomer (C1) containing at least one carbon-carbon double bond and at least one decomplexing agent (C2).

The decomplexing agent (C2) is a compound that is able to react with the donor molecule of the organoborane-donor complex (B1) under generation of the organoborane molecule itself which forms together with molecular oxygen (O₂) an initiator system for radical reactions.

In case of the preferred organoborane-amine complexes the amine is preferably removed by reaction with a Brønsted acid wherein preferably a water soluble ammonium salt is formed. Preferably the pH-value of the aqueous solution (C) is in the range from 1 to 6, more preferably in the range from 3 to 5.

In one embodiment of the present invention the inventive process is characterized in that the decomplexing agent is a Brønsted acid and the pH-value of the aqueous solution (C) is in the range from 3 to 5.

Monomers containing at least one carbon-carbon double bond which are at least partially soluble in water and which can be polymerized in a radical polymerization are known. Preferred are monomers (C1) which are easily soluble in water. Water soluble monomers usually comprise moieties which are either charged (cations or anions) or which are polar protic or dipolar aprotic. Particularly preferred monomers (C1) are selected from the group of monomers consisting of lithium or sodium 4-vinylbenzenesulfonate, 4-vinylbenzenesulfonic acid, acrylic acid, sodium or lithium acrylate, N-vinylimidazol, acrylamide, N,N-dimethylacrylamide, N-vinylpyrrolidon, acrylates of the general formula (I) and acrylamides of the general formula (II) 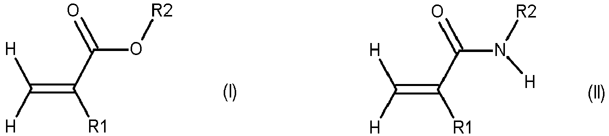 wherein
- R1: is hydrogen or methyl,
- R2: is an alkyl-terminated polyether radical of formula (a) or formula (b) 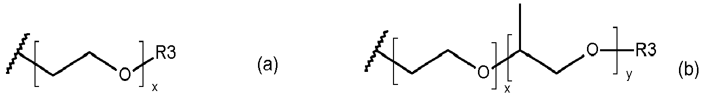 wherein
- R3: is an alkyl group with 1 to 10 carbon, in particular methyl, ethyl or butyl, and
- x, y: are equal or different and are each an integer from 1 to 11, wherein x + y is an integer from 3 to 12 and wherein the ethylene oxide and propylene oxide units in formula (b) can be combined in any order,

N,N-dimethylaminoethyl methacrylate, itaconic acid, sodium or lithium itaconic acid and mixtures thereof, in particular lithium or sodium 4-vinylbenzenesulfonate, 4-vinylbenzenesulfonic acid, acrylic acid, sodium or lithium acrylate, acrylamide, N,N-dimethylacrylamide and mixtures thereof.

In one embodiment of the present invention the inventive process is characterized in that the monomer (C1) is selected from the group of monomers consisting of lithium or sodium 4-vinylbenzenesulfonate, 4-vinylbenzenesulfonic acid, acrylic acid, sodium or lithium acrylate, N-vinylimidazol, acrylamide, N,N-dimethylacrylamide, N-vinylpyrrolidon, acrylates of the general formula (I) and acrylamides of the general formula (II) 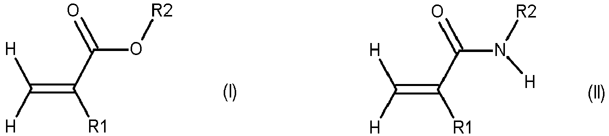 wherein
- R1: is hydrogen or methyl,
- R2: is an alkyl-terminated polyether radical of formula (a) or formula (b) 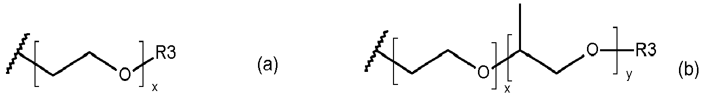
wherein
- R3: is an alkyl group with 1 to 10 carbon atoms, in particular methyl, ethyl or butyl, and
- x, y: are equal or different and are each an integer from 1 to 11, wherein x + y is an integer from 3 to 12 and wherein the ethylene oxide and propylene oxide units in formula (b) can be combined in any order,

N,N-dimethylaminoethyl methacrylate, itaconic acid, sodium or lithium itaconic acid and mixtures thereof, in particular lithium or sodium 4-vinylbenzenesulfonate, 4-vinylbenzenesulfonic acid, acrylic acid, sodium or lithium acrylate, acrylamide, N,N-dimethylacrylamide and mixtures thereof.

The concentration of monomer (C1) in the aqueous solution (C) can be varied in a wide range. Preferably the proportion by weight of the sum of all monomers (C1) based on the total weight of solution (C) is in the range from 0.1 to 20% by weight, preferably in the range from 1 to 10% by weight.

In one embodiment of the present invention the inventive process is characterized in that the proportion by weight of the sum of all monomers (C1) based on the total weight of solution (C) is in the range from 1 to 10% by weight.

The time for contacting the porous polyolefin membrane, which comprises physically adsorbed organoborane-donor complex (B1) and molecular oxygen (O₂) can be varied in a wide range depending on the reaction temperature, the concentration of decomplexing agent (C2), the concentration of monomer (C1) and depending on the desired amount of polymerized monomer(s) (C1). Preferably the treated membrane of process step (b) is contacted with solution (C) for a time in the range from 10 sec to 1000 min, preferably in the range from 0.5 min to 20 min. Even though the reaction temperature of process step (c) can be varied in a wide range, reaction step c) is preferably performed at a temperature in the range from 0 °C to 100 °C, more preferably in the range from 15 °C to 30 °C, in particular at room temperature.

In one embodiment of the present invention the inventive process is characterized in that in process step (c) the treated membrane of process step (b) is contacted with solution (C) for a time in the range from 0.5 min to 20 min, preferably at room temperature.

Both in process step (a) and in process step (c) the contacting of the solid material - that is the membrane - with either the organoborane-donor complex (B1) or the monomer (C1) can be done by different known coating methods, preferably such methods for applying a liquid to at least one surface of a solid body such as spray coating, brushing, screen printing, dip coating or spin coating, preferably dip coating. Even though it is possible to contact only one side of the membrane with an appropriate liquid, with solution (B) in process step (a) and with the aqueous solution (C) in process step (c), it is preferred to contact both sides of the membrane likewise with the appropriate liquid. In process steps (a) and (c) the contacting of the membrane is preferably done by completely dipping the membrane in an immersion bath containing the respective liquid. The inventive process allows the modification of single sheets and continuous belts of porous polyolefin membranes.

In one embodiment of the present invention the inventive process is characterized in that in process step (a) and in process step (c) the contacting process is in each case performed by completely dipping the membrane in a suitable immersion bath.

In an optional process step (d) the modified membrane can be rinsed with suitable solvents in order to remove unreacted monomers, salts, decomposition products originating from the organoborane and polymer molecules, which are neither grafted to the polyolefin of the porous membrane nor interloped with the polyolefin matrix of the membrane.

Additionally it is possible to convert any acidic functional groups of the polymerized monomers (C1) to the corresponding lithiated functional groups by treating the modified membrane with an appropriate lithium compound, such as lithium hydroxide, lithium carbonate or an lithium alkoholate.

The inventive process offers an easy method for a broad variety of chemical modifications of porous polyolefin membranes, which can be used in electrochemical cells. In particular it is possible to change the hydrophobic property of the initial membranes and to obtain membranes with a polar, more hydrophilic surface which are better wettable with electrolytes or which can interact with certain components dissolved in the electrolyte of an electrochemical cell. The modification of the porous polyolefin membranes occurs both on the outside of the separator and in the interior of its pores. Furthermore the modification of the porous polyolefin membranes can be performed at ambient temperature without any devices for heating or cooling. Also no devices for generating UV light or high vacuum are necessary.

The present invention further also provides a modified porous polyolefin membrane obtainable or obtained by a process comprising at least the process steps of
(a) contacting a porous polyolefin membrane (A) with at least one organoborane-donor complex (B1),
(b) contacting the treated membrane of process step (a) with molecular oxygen (O₂),
(c) contacting the treated membrane of process step (b) with an aqueous solution (C) comprising
   (C1) at least one monomer (C1) containing at least one carbon-carbon double bond, and
   (C2) at least one decomplexing agent,
   and
(d) optionally rinsing the membrane which has been modified in process step (c) and/or further modifying said membrane by converting any acidic functional groups of the polymerized monomers (C1) to the corresponding lithiated functional groups.

The process steps a), b), c) and d) have been described above. In particular, preferred embodiments of the process steps have been described above.

The modified porous polyolefin membrane, which is obtainable or obtained by the inventive process, has a porosity in the range from 30 % to 70 % and a pore size from 0.01 µm to 1 µm.

In one embodiment of the present invention the inventive membrane is characterized in that the modified porous polyolefin membrane has a porosity in the range from 30 % to 70 % and a pore size from 0.01 µm to 1 µm.

In another embodiment of the present invention the inventive membrane is characterized in that the modified porous polyolefin membrane has a thickness in the range from 5 to 200 µm, preferably in the range from 8 to 40 µm.

In another embodiment of the present invention the inventive membrane is characterized in that the ratio of the area density of the inventive membrane to the area density of the original porous polyolefin membrane (A), which was modified in the inventive process, is in the range of 1.001 to 1.15, preferably in the range of 1.01 to 1.05. That means that the percentage increase in weight of the inventive membrane based on the weight of the original porous polyolefin membrane (A) is in the range from 0.1 % to 15%, preferably from 1 % to 5%.

The inventive modified porous polyolefin membranes have advantageous properties. They show good wettability with electrolyte solvents and electrochemical cells comprising said inventive modified porous polyolefin membranes show an improved cycle life.

The inventive modified porous polyolefin membrane is particularly suitable as separator or as constituent of a separator in electrochemical cells, in particular in rechargeable electrochemical cells in order to separate anode from cathode in an electrochemical cell. By the above-described process the modified porous polyolefin membrane can be obtained in the form of sheets or as continuous belts which are processed further by the battery manufacturer, especially assembling the inventive modified porous polyolefin membrane with appropriate flat cathodes and flat anodes in order to produce electrochemical cells.

For the purposes of the present invention, the term electrochemical cell or battery encompasses batteries, capacitors and accumulators (secondary batteries) of any type, in particular alkali metal cells or batteries such as lithium, lithium ion and alkaline earth metal batteries and accumulators, including in the form of high-energy or high-power systems, and also electrolyte capacitors and double-layer capacitors which are known under the names Supercaps, Goldcaps, BoostCaps or Ultracaps.

The present invention further also provides for the use of the inventive modified porous polyolefin membrane as described above as part of an electrochemical cell, namely as separator.

The present invention further provides an electrochemical cell comprising at least one modified porous polyolefin membrane as described above, in particular a rechargeable electrochemical cell comprising
(I) at least one anode (I),
(II) at least one cathode (II),
(III) at least one electrolyte composition (III) comprising
   (III1) at least one aprotic organic solvent (III1), and
   (1112) at least one alkali metal salt (III2), and
(IV) at least one modified porous polyolefin membrane as described above.

As regards suitable cathode materials, suitable anode materials, suitable electrolytes and possible arrangements, reference is made to the relevant prior art, e.g. appropriate monographs and reference works: e.g. Wakihara et al. (editor): Lithium ion Batteries, 1st edition, Wiley VCH, Weinheim, 1998; David Linden: Handbook of Batteries (McGraw-Hill Handbooks), 3rd edition, Mcgraw-Hill Professional, New York 2008; J. O. Besenhard: Handbook of Battery Materials. Wiley-VCH, 1998.

Inventive cells are preferably selected from alkali metal containing cells. More preferably, inventive cells are selected from lithium-ion containing cells. In lithium-ion containing cells, the charge transport is effected by Li⁺ ions.

Suitable anodes, cathodes and electrolyte compositions are described in detail in PCT/EP2014/077410 on page 10, line 26 to page 16, line 16 wherein said reference is incorporated by reference in its entirety for all useful purposes.

In the context with the present invention, the electrode where during discharging a net negative charge occurs is called the anode.

Anode (I) can be selected from anodes being based on various active materials. Suitable active materials are metallic lithium, carbon-containing materials such as graphite, graphene, charcoal, expanded graphite, in particular graphite, furthermore lithium titanate (Li₄Ti₅O₁₂), anodes comprising In, TI, Sb, Sn or Si, in particular Sn or Si, for example tin oxide (SnO₂) or nanocrystalline silicon, and anodes comprising metallic lithium.

In one embodiment of the present invention the electrochemical cell is characterized in that anode (I) is selected from graphite anodes, lithium titanate anodes, anodes comprising In, TI, Sb, Sn or Si, and anodes comprising metallic lithium.

Anode (I) can further comprise a current collector. Suitable current collectors are, e.g., metal wires, metal grids, metal gaze and preferably metal foils such as copper foils.

Anode (I) can further comprise a binder. Suitable binders can be selected from organic (co)polymers. Suitable organic (co)polymers may be halogenated or halogen-free. Examples are polyethylene oxide (PEO), cellulose, carboxymethyl cellulose, polyvinyl alcohol, polyethylene, polypropylene, polytetrafluoroethylene, polyacrylonitrile-methyl methacrylate, styrenebutadiene copolymers, tetrafluoroethylene-hexafluoropropylene copolymers, vinylidene fluoridehexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers, ethylene-chlorofluoroethylene copolymers, ethylene-acrylic acid copolymers, optionally at least partially neutralized with alkali metal salt or ammonia, ethylene-methacrylic acid copolymers, optionally at least partially neutralized with alkali metal salt or ammonia, ethylene-(meth)acrylic ester copolymers, polysulfones, polyimides and polyisobutene.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

The average molecular weight M_{w} of binder may be selected within wide limits, suitable examples being 20,000 g/mol to 1,000,000 g/mol.

In one embodiment of the present invention, anode (I) can have a thickness in the range of from 15 to 200 µm, preferably from 30 to 100 µm, determined without the current collector.

Inventive cells further comprise a cathode (II). Cathode (II) can contain solid, liquid or gaseous active materials, e. g., air (or oxygen). In a preferred embodiment, however, cathode (II) contains a solid active material.

Solid active materials for cathode (II) can be selected from phosphates with olivine structure such as lithium iron phosphates (LiFePO₄) and lithium manganese phosphate (LiMnPO₄) which can have a stoichiometric or non-stoichiometric composition and which can be doped or not doped.

In one embodiment of the present invention, active material for cathode (II) can be selected from lithium containing transition metal spinels and lithium transition metal oxides with a layered crystal structure. In such cases, cathode (II) contains at least one material selected from lithium containing transition metal spinels and lithium transition metal oxides with a layered crystal structure, respectively.

In one embodiment of the present invention the electrochemical cell is characterized in that cathode (II) contains at least one material selected from lithium containing transition metal spinels and lithium transition metal oxides with a layered crystal structure.

In one embodiment of the present invention, lithium-containing metal spinels are selected from those of the general formula (V)

LiₐM¹_{b}Mn_{3-a-b}O_{4-d} (V)

the variables being defined as follows:
0.9 ≤ a ≤ 1.3, preferably 0.95 ≤ a ≤ 1.15,
0 ≤ b ≤ 0.6, for example 0.0 or 0.5,
wherein, if M¹ = Ni, 0.4 ≤ b ≤ 0.55,
-0.1 ≤ d ≤ 0.4, preferably 0 ≤ d ≤ 0.1,

M¹ is selected from one or more out of Al, Mg, Ca, Na, B, Mo, W and transition metals of the first row of the transition metals in the periodic table of the elements. In a preferred embodiment, M¹ is selected from the group consisting of Ni, Co, Cr, Zn, and Al. Even more preferably, M¹ is defined to be Ni.

In one embodiment of the present invention, lithium containing metal spinels are selected from LiNi_{0,5}Mn_{1,5}O_{4-d} and LiMn₂O₄.

In one embodiment of the present invention, lithium transition metal oxides with a layered crystal structure are selected from compounds of general formula (VI)

Li₁₊ₜM²₁₋ₜO₂ (VI)

the variable being defined as follows:
0 ≤ t ≤ 0.3 und

M² selected from one or more elements from Al, Mg, B, Mo, W, Na, Ca and transition metals of the first row of the transition metals in the periodic table of the elements, at least one element being manganese.

In one embodiment of the present invention, at least 30 mole-% of M² are selected from manganese, preferably at least 35 mole-%, in each time with respect to the complete amount of M².

In one embodiment of the present invention M² is selected from combinations of Ni, Co and Mn not containing significant amounts of additional elements.

In a different embodiment of the present invention M² is selected from combinations of Ni, Co and Mn containing significant amounts of at least one additional element, for example in the range of from 1 to 10 mole-% Al, Ca or Na.

In a particular embodiment of the present invention, lithium transition metal oxides with a layered crystal structure are selected from compounds of general formula (VII)

Li₍₁₊ₓ₎[NiₑCo_{f}Mn_{g}M³ₕ]₍₁₋ₓ₎O₂ (VII)

the variables being defined as follows:
x a number in the range of from zero to 0.2,
e a number in the range of from 0.2 to 0.6,
f a number in the range of from 0.1 to 0.5,
g a number in the range of from 0.2 to 0.6,
h a number in the range of from zero to 0.1,
and: e + f + g + h = 1,
M³ selected from Al, Mg, V, Fe, Cr, Zn, Cu, Ti and Mo.

In one embodiment of the present invention, M² in formula (VI) is selected from Ni_{0,33}Co_{0,33}Mn_{0,33}, Ni_{0,5}Co_{0,2}Mn_{0,3}, Ni_{0,4}Co_{0,3}Mn_{0,4}, Ni_{0,4}Co_{0,2}Mn_{0,4} und Ni_{0,45}Co_{0,10}Mn_{0,45}.

Cathode (II) can further comprise a current collector. Suitable current collectors are, e.g., metal wires, metal grids, metal gaze and preferably metal foils such as aluminum foils.

Cathode (II) can further comprise a binder. Suitable binders can be selected from organic (co)polymers. Suitable organic (co)polymers may be halogenated or halogen-free. In general, the same binders used for anode (I) can also be employed for cathode (II).

Preferred binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

In one embodiment of the present invention, cathode (II) can have a thickness in the range of from 15 to 200 µm, preferably from 30 to 100 µm, determined without the current collector.

Cathode (II) can further comprise electrically conductive carbonaceous material.

Electrically conductive carbonaceous material can be selected, for example, from graphite, carbon black, carbon nanotubes, graphene or mixtures of at least two of the aforementioned substances. In the context of the present invention, electrically conductive, carbonaceous material can also be referred to as carbon for short.

In one embodiment of the present invention, electrically conductive carbonaceous material is carbon black. Carbon black may, for example, be selected from lamp black, furnace black, flame black, thermal black, acetylene black and industrial black. Carbon black may comprise impurities, for example hydrocarbons, especially aromatic hydrocarbons, or oxygen-containing compounds or oxygen-containing groups, for example OH groups. In addition, sulfur- or iron-containing impurities are possible in carbon black.

In one variant, electrically conductive carbonaceous material is partially oxidized carbon black.

In one embodiment of the present invention the electrochemical cell is characterized in that cathode (II) contains a material based on electrically conductive carbon.

Inventive electrochemical cells further comprise, as well as the inventive modified porous poly-olefin membrane, the anode (I) and the cathode (II), at least one electrolyte composition (III) comprising
(III1) at least one aprotic organic solvent (III1), and
(1112) at least one alkali metal salt (III2).

Possible aprotic organic solvents (1111) may be liquid or solid at room temperature and are preferably liquid at room temperature. Solvents (III1) are preferably selected from polymers, cyclic or noncyclic ethers, cyclic or noncyclic acetals, cyclic or noncyclic organic carbonates and ionic liquids.

In one embodiment of the present invention the inventive rechargeable electrochemical cell is characterized in that the aprotic organic solvent (III1) is selected from polymers, cyclic or noncyclic ethers, noncyclic or cyclic acetals and cyclic or noncyclic organic carbonates.

Examples of suitable polymers are especially polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably doubly methyl- or ethyl-capped polyalkylene glycols.

The molecular weight M_{w} of suitable polyalkylene glycols and especially of suitable polyethylene glycols may be at least 400 g/mol.

The molecular weight M_{w} of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, 1,2-diethoxyethane, preference being given to 1,2-dimethoxyethane.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable cyclic organic carbonates are compounds of the general formulae (X) and (XI) 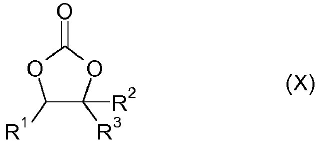 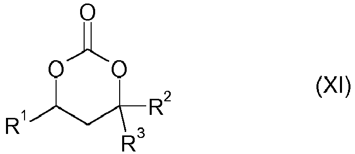 in which R¹, R² and R³ may be the same or different and are each selected from hydrogen and C₁-C₄-alkyl, for example methyl, ethyl, n-propyl, isopropyl, n-butyl, isobutyl, sec-butyl and tert-butyl, where R² and R³ are preferably not both tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (XII).

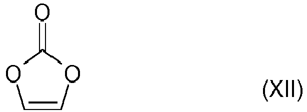

Preference is given to using the solvent(s) in what is called the anhydrous state, i.e. with a water content in the range from 1 ppm to 0.1 % by weight, determinable, for example, by Karl Fischer titration.

Possible alkali metal salts (1112), which are used as conductive salts, have to be soluble in the aprotic organic solvent (III1). Preferred alkali metal salts (III2) are lithium salts or sodium salts, in particular lithium salts.

In one embodiment of the present invention the inventive rechargeable electrochemical cell is characterized in that the alkali metal salt (III2) is a lithium salt or sodium salt, preferably a lithium salt.

Suitable alkali metal salts are especially lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄, and salts of the general formula (CₙF₂ₙ₊₁SO₂)ₘXLi, where m is defined as follows:
m = 1 when X is selected from oxygen and sulfur,
m = 2 when X is selected from nitrogen and phosphorus, and
m = 3 when X is selected from carbon and silicon.

Preferred alkali metal salts are selected from LiC(CF₃SO₂)₃, LiN(CF₃SO₂)₂, LiPF₆, LiBF₄, LiClO₄, and particular preference is given to LiPF₆ and LiN(CF₃SO₂)₂.

In one embodiment of the present invention, the concentration of conductive salt in electrolyte is in the range of from 0.01 M to 5 M, preferably 0.5 M to 1.5 M.

Inventive electrochemical cells further comprise as separator at least one inventive modified porous polyolefin membrane, which has been described above, wherein the separator is positioned between anode (I) and cathode (II) in the electrochemical cells.

In one embodiment of the present invention, the separator is positioned between anode (I) and cathode (II) in a way that it is like a layer to either a major part of one surface of anode (I) or cathode (II).

In one embodiment of the present invention, the separator is positioned between anode (I) and cathode (II) in a way that it is like a layer to both a major part of one surface of anode (I) and cathode (II).

In a preferred embodiment of the present invention, the separator is positioned between anode (I) and cathode (II) in a way that it is like a layer to one surface of anode (I) or of cathode (II).

In another preferred embodiment of the present invention, the separator is positioned between anode (I) and cathode (II) in a way that it is like a layer to one surface of both anode (I) and of cathode (II).

Inventive modified porous polyolefin membranes have overall advantageous properties. They help to secure a long duration of electrochemical cells with very low loss of capacity, good cycling stability, and a reduced tendency towards short circuits after longer operation and/or repeated cycling. They can help batteries to have a long duration with very low loss of capacity, good cycling stability, and high temperature stability.

In one embodiment of the present invention, inventive electrochemical cells can contain additives such as wetting agents, corrosion inhibitors, or protective agents such as agents to protect any of the electrodes or agents to protect the salt(s).

In one embodiment of the present invention, inventive electrochemical cells can have a disc-like shape. In another embodiment, inventive electrochemical cells can have a prismatic shape.

In one embodiment of the present invention, inventive electrochemical cells can include a housing that can be from steel or aluminium.

In one embodiment of the present invention, inventive electrochemical cells are combined to stacks including electrodes that are laminated.

In one embodiment of the present invention, inventive electrochemical cells are selected from pouch cells.

Inventive electrochemical cells have overall advantageous properties. They have a long duration with very low loss of capacity, good cycling stability, and a reduced tendency towards short circuits after longer operation and/or repeated cycling.

A further aspect of the present invention refers to batteries, more preferably to an alkali metal ion battery, in particular to a lithium ion battery comprising at least one inventive electrochemical cell, for example two or more. Inventive electrochemical cells can be combined with one another in inventive alkali metal ion batteries, for example in series connection or in parallel connection. Series connection is preferred.

Inventive batteries have advantageous properties. They have a long duration with very low loss of capacity, good cycling stability, and high temperature stability.

The inventive electrochemical cells or inventive batteries can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of the present invention is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present invention is the use of the electrochemical cell as described above in motor vehicles, bicycles operated by electric motor, aircraft, ships or stationary energy stores.

The use of inventive electrochemical cells in devices gives the advantage of prolonged run time before recharging and a smaller loss of capacity in the course of prolonged run time. If the intention were to achieve an equal run time with electrochemical cells with lower energy density, a higher weight for electrochemical cells would have to be accepted.

The present invention further provides a device comprising at least one inventive electrochemical cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated by the examples which follow but do not restrict the invention.

Figures in percent are each based on % by weight, unless explicitly stated otherwise.
I. Preparation of modified porous polyolefin membranes
I.a Preparation of a porous polyolefin membrane grafted with poly(lithium 4-styrene sulfonate) - M.1

A trilayer polyolefin separator belt (45 mm wide; Celgard 2325 supplied from Celgard) was cut into sheets of 4.5 cm x 11 cm dimensions. The sheets were immersed into a 2.5 vol% triethyl-borane:morpholine in hexanes bath for one minute (11.25 mL triethylborane:morpholine to 438.75 ml hexanes). The sheets were then transferred to a sodium 4-vinylbenzenesulfonate in H₂O bath for 5 minute residence time (6.25 g (0.030 M) sodium 4-vinylbenzenesulfonate, 0.63 g (0.105 M) acetic acid, 243.75g H₂O). The sheets were rinsed under tap H₂O for approximately 1 minute and dried in a vacuum chamber for 1 hour at room temperature. Four sheets were prepared according to these conditions.
The membranes were placed individually into glass vials with 2 M LiOH, and the vials placed onto a pivoting water bath at room temperature overnight. After extensive washing with distilled water, the membranes were treated for another 24 h with distilled water and dried in vacuum overnight at room temperature.

### I.b Preparation of a porous polyolefin membrane grafted with poly(acrylamide) - M.2

A trilayer polyolefin separator belt (45 mm wide; Celgard 2325 supplied from Celgard) was cut into sheets of 4.5 cm x 11 cm dimensions. The sheets were immersed into a 2.5 vol% triethyl-borane:morpholine in hexanes bath for one minute (11.25 mL triethylborane:morpholine to 438.75 ml hexanes). The sheets were then transferred to an acrylamide solution in H₂O bath for 5 minute residence time (6.25 g (87.9 mM) acrylamide, 0.63 g (10.5 mM) acetic acid, 243.75g H₂O). The sheets were rinsed under tap H₂O for approximately 1 minute and dried in a vacuum chamber for 1 hour at room temperature. Four samples were prepared in these conditions.

### II. Production of electrochemical cells and testing thereof

### II.a Cell assembly

Pouch cells were prepared from commercial graphite anodes (active material loading ∼2.35 mAh/cm²) and HV-spinel cathodes derived from in-house coated cathode tape K0367 (active material LiNi_{0.5}Mn_{1.5}O₄ / HSV 900 PVDF binder / Super C65 carbon black / KS6 graphite = 88/6/3/3). Active material loading was ∼2.0 mAh/cm².Cathode pieces (3.5 cm x 5 cm) were punched out by using a precision steel die. Tab leads were joined by ultrasonic welding (UI-traWeld 40IA Branson). Anodes were prepared with a size of 4 cm x 5.6 cm, in order to ensure overlapping. On cathode side, aluminum tabs (Sumitomo) were employed. Anodes were joined with nickel tabs (Sumitomo). The size of the separator layer was 4.5 cm x 6 cm in order to avoid short-circuits. All cell components were transferred into an argon atmosphere glovebox (M. Braun). H₂O content was less than 1 ppm and oxygen content was less than 10 ppm. In order to reduce permeation, the box was equipped with 0.4 mm butyl gloves and kept under overpressure (∼3 mbar). Electrodes (with tabs) were dried in an oven inside the glovebox at 5 mbar at 120 °C over night. Separators were dried at 5 mbar and 60 °C over night. Anode, separator and cathode were stacked between two sheets of Okura 801 battery grade pouch foil (aluminum polymer laminate). A pouch bag was prepared by first heat-sealing of the assembly on the side of the tab leads (thus, the electrodes are fixed in position) and the heat sealing the left and right side. The pouch bag was filled with BASF standard electrolyte LP57 (1 M LiPF₆ in 3:7 mixture of ethylene carbonate (EC) and ethylmethylcarbonate (EMC) before heat-sealing of the final side.

| | |
|---|---|
| Cell C.1: | M.1 prepared in example I.a was used as separator |
| Cell C.2: | M.2 prepared in example I.b was used as separator |
| Comparative Cell CC.3 | original Celgard 2325 was used as separator |

### II.b Electrochemical testing

The cells were placed between two aluminum blocks. In order to level the pressure constantly on the whole area of the cell, PTFE foam (Gore) was used and a defined stack pressure was applied. The tabs were then connected to a Maccor Series 4000 battery tester. Cycling was done in CC/CV mode. A constant current (CC) of 0.2 C was applied until a voltage of 4.8 V was reached. Then, the cell was charged at this constant voltage (CV) until the residual current fell below 0.1 C (max. 30 min), followed by discharging to 3.3 V. After two formation cycles at 0.2 C, the charge/discharge rate was increased to 0.5 C for 10 cycles to stabilize the cell. A C-rate test was conducted (charge rate always 1 C, discharge rate 3 cycles 1 C, 3 cycles 2 C, 3 cycles 4 C, 3 cycles 10 C), followed by 52 cycles at 1 C charge and discharge rate

**Table 1: Discharge capacities of lithium ion battery pouch cells operating with high voltage nickel manganese spinel cathodes after 13 and 75 cycles:**

| Membrane | Electrochemical cell | capacity @ cycle 13 [mAh/g] | capacity @ cycle 75 [mAh/g] | capacity retention@cycle 75 |
|---|---|---|---|---|
| M.1 | C.1 | 114 | 89.4 | 78% |
| M.2 | C.2 | 114 | 82.4 | 72% |
| Celgard 2325 | CC.3 | 116 | 69.8 | 60% |

## Claims

1. A process for producing a modified porous polyolefin membrane,
comprising at least the process steps of
(a) contacting a porous polyolefin membrane (A) with at least one organoborane-donor complex (B1),
(b) contacting the treated membrane of process step (a) with molecular oxygen (O₂),
(c) contacting the treated membrane of process step (b) with an aqueous solution (C) comprising
(C1) at least one monomer (C1) containing at least one carbon-carbon double bond,
and
(C2) at least one decomplexing agent,
and
(d) optionally rinsing the membrane which has been modified in process step (c) and/or further modifying said membrane by converting any acidic functional groups of the polymerized monomers (C1) to the corresponding lithiated functional groups.

2. The process according to claim 1, wherein the porous polyolefin membrane (A) comprises one or more polyolefines selected from the group consisting of polyethylene, polypropylene, polybutylene, copolymers of ethylene and propylene and copolymers of ethylene with hexene or octene.

3. The process according to claim 1 or 2, wherein the porous polyolefin membrane (A) has a porosity in the range from 30% to 70%, a pore size from 0.01 µm to 1 µm and a thickness in the range from 5 to 200 µm.

4. The process according to any of claims 1 to 3, wherein the organoborane-donor complex (B1) is an organoborane-amine complex.

5. The process according to any of claims 1 to 4, wherein in process step (a) the organoborane-donor complex (B1) is used as a solution (B) comprising the organoborane-donor complex (B1) and at least one solvent (B2), wherein the proportion by weight of the sum of all organoborane-donor complexes (B1) based on the total weight of solution (B) is in the range from 1 to 5% by weight.

6. The process according to claim 5, wherein the solvent (B2) is selected from the group consisting of C₅-C₂₀-alkanes, C₆-C₁₀-cycloalkanes and C₇-C₁₈-alkyl substituted aromatic hydrocarbons.

7. The process according to any of claims 1 to 6, wherein in process step (b) the source of the molecular oxygen O₂ is air and the contact takes place at room temperature and atmospheric pressure.

8. The process according to any of claims 1 to 7, wherein the monomer (C1) is selected from the group of monomers consisting of lithium or sodium 4-vinylbenzenesulfonate, 4-vinylbenzenesulfonic acid, acrylic acid, sodium or lithium acrylate, N-vinylimidazol, acrylamide, N,N-dimethylacrylamide, N-vinylpyrrolidon, acrylates of the general formula (I) and acrylamides of the general formula (II) 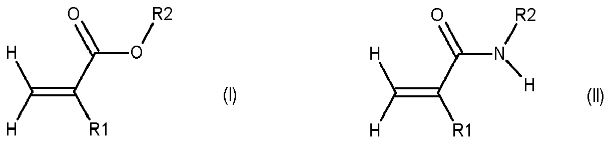 wherein
R1 is hydrogen or methyl,
R2 is an alkyl-terminated polyether radical of formula (a) or formula (b) 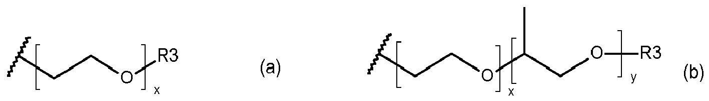
wherein
R3 is an alkyl group with 1 to 10 carbon atoms, in particular methyl, ethyl or butyl, and
x, y are equal or different and are each an integer from 1 to 11, wherein x + y is an integer from 3 to 12 and wherein the ethylene oxide and propylene oxide units in formula (b) can be combined in any order,
N,N-dimethylaminoethyl methacrylate, itaconic acid, sodium or lithium itaconic acid and mixtures thereof.

9. The process according to any of claims 1 to 8, wherein the proportion by weight of the sum of all monomers (C1) based on the total weight of solution (C) is in the range from 1 to 10% by weight.

10. The process according to any of claims 1 to 9, wherein in process step (c) the treated membrane of process step (b) is contacted with solution (C) for a time in the range from 0.5 min to 20 min.

11. The process according to any of claims 1 to 10, wherein the decomplexing agent is a Brønsted acid and the pH-value of the aqueous solution (C) is in the range from 3 to 5.

12. A modified porous polyolefin membrane obtainable or obtained by a process comprising at least the process steps of,
(a) contacting a porous polyolefin membrane (A) with at least one organoborane-donor complex (B1),
(b) contacting the treated membrane of process step (a) with molecular oxygen (O₂),
(c) contacting the treated membrane of process step (b) with an aqueous solution (C) comprising
(C1) at least one monomer (C1) containing at least one carbon-carbon double bond,
and
(C2) at least one decomplexing agent,
and
(d) optionally rinsing the membrane which has been modified in process step (c) and/or further modifying said membrane by converting any acidic functional groups of the polymerized monomers (C1) to the corresponding lithiated functional groups.

13. An electrochemical cell comprising at least one modified porous polyolefin membrane according to claim 12.

14. A lithium ion battery comprising at least one electrochemical cell according to claim 13.

15. A device comprising at least one electrochemical cell according to claim 13.
